# EUROPEAN PATENT APPLICATION

(11) **EP 4 738 092 A1**
(43) Date of publication of application: **06.05.2026**
(21) Application number: 25212635.4
(22) Date of filing: 31.10.2025
(51) Int. Cl.: G06F 3/12, H04N 1/00

(54) **INSPECTION SYSTEM CAPABLE OF QUICKLY PERFORMING INSPECTION OF PRINT PRODUCT**

(30) Priority: 05.11.2024 JP 2024193543
(71) Applicant: Canon Kabushiki Kaisha, Tokyo, 146-8501 (JP)
(72) Inventor: TAKAO, Yoshifumi, Tokyo, 146-8501 (JP); YOKOTA, Kazuyuki, Tokyo, 146-8501 (JP)
(74) Representative: TBK

(57) **Abstract**

An inspection system including a display unit and an interface configured to receive data including a plurality of pages. The data is sent from a computer in response to a single instruction for sending the data by a user of the computer. Based on the received data, reference data is generated, and a printing unit is caused to print the plurality of pages on separate sheets. Each of the printed plurality of pages is read to generate a read image of each page. The read image of each page is inspected based on the generated reference data. An inspection result indicating whether a read image of a page is defective is displayed on the display unit during the inspection of a read image of one of subsequent pages in the plurality of pages.

## Description

### TECHNICAL FIELD

The present disclosure relates to an inspection system that is capable of quickly performing inspection of a print product.

### BACKGROUND

An image forming apparatus generates a print product by printing an image on a sheet based on image data. Particularly, an image forming apparatus used for commercial printing sometimes prints a large number of copies or a large number of pages as print products. Further, there is a case where a print product is inspected with respect to its quality. In this case, in an inspection device, a read image obtained by reading a print product using e.g. a scanner and a reference image are compared, and the quality of the print product is inspected based on a result of the comparison. Further, the reference image is required to be registered in the inspection device for performing the quality inspection. For example, Japanese Laid-Open Patent Publication (Kokai) No. 2023-80455 describes a device that generates a reference image registration job for registering a reference image.

However, in a case where the device described in Japanese Laid-Open Patent Publication (Kokai) No. 2023-80455 is used, not only generation of the reference image registration job, but also a job for forming an image to be inspected is additionally required. Since the two jobs are independently generated as described above, this causes a problem that the inspection time of a print product is prolonged by time required to generate these jobs. Particularly, in a case where a large number of copies or a large number of pages are printed as print products, the inspection time of the print products tends to be remarkably prolonged.

### SUMMARY

The present disclosure is directed to providing an inspection system that is capable of quickly performing inspection of a print product.

The present disclosure provides an inspection system as specified in claim 1. Optional features are specified in claim 2 to 8

According to the present disclosure, it is possible to quickly perform inspection of a print product.

Features of the present disclosure will become apparent from the following description of embodiments with reference to the attached drawings. The following description of embodiments is described by way of example.

### BRIEF DESCRIPTION OF THE DRAWINGS

FIG. 1 is a schematic view showing an entire configuration of an inspection system according to a first embodiment.
FIG. 2 is a block diagram showing hardware configurations of an image forming apparatus, an inspection unit, a large-capacity stacker, an inspection device, an information processing apparatus, and a reference image generation device, respectively.
FIG. 3 is a schematic view showing internal configurations of the image forming apparatus, the inspection unit, and the large-capacity stacker.
FIG. 4 is a diagram showing a screen displayed on the information processing apparatus.
FIG. 5 is a diagram showing a screen displayed on the inspection device.
FIG. 6-1 and FIG. 6-2 are sequence diagrams showing a process executed between the information processing apparatus, the reference image generation device, the image forming apparatus, and the inspection device.
FIG. 7 is a block diagram showing hardware configurations of an image forming apparatus, an inspection unit, a large-capacity stacker, an inspection device, an information processing apparatus, and a reference image generation device, according to a second embodiment.
FIG. 8-1 and FIG. 8-2 are sequence diagrams showing a process executed between the information processing apparatus, the reference image generation device, the image forming apparatus, and the inspection device.
FIG. 9-1 and FIG. 9-2 are sequence diagrams showing a process executed between an information processing apparatus, a reference image generation device, and an image forming apparatus, according to a third embodiment.

### DESCRIPTION OF THE EMBODIMENTS

### First Embodiment

The present disclosure will now be described in detail below with reference to the accompanying drawings showing embodiments thereof. Configurations described in the following embodiments are given only by way of example, and are by no means intended to limit the scope of the present disclosure. For example, components of the configurations of the present disclosure can be replaced with desired components which can exhibit the same functions. Further, desired components can be added. Further, two or more desired components (features) of the embodiments can be combined.

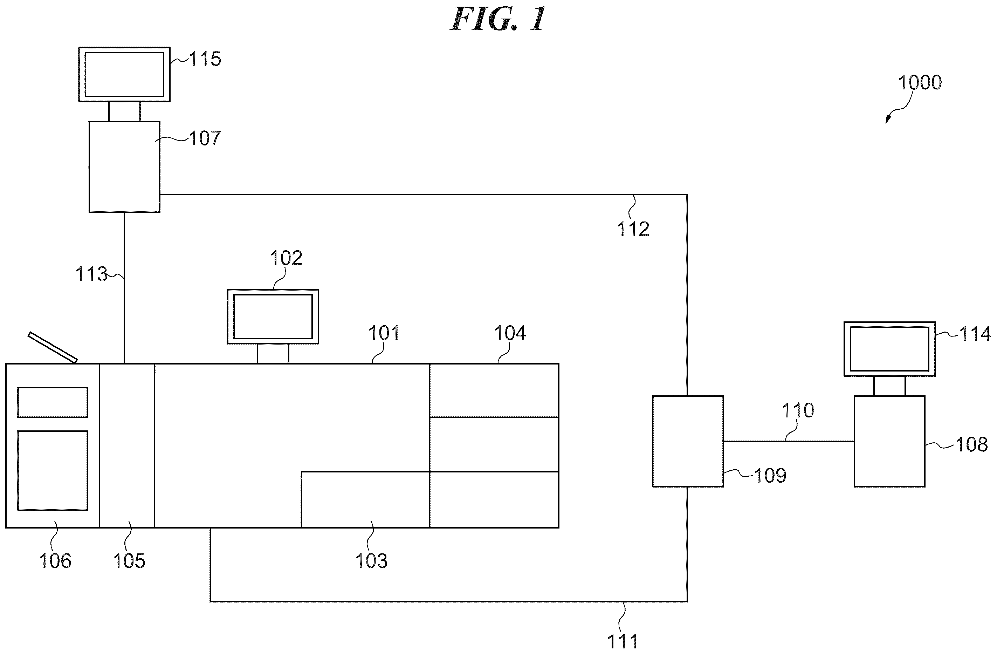

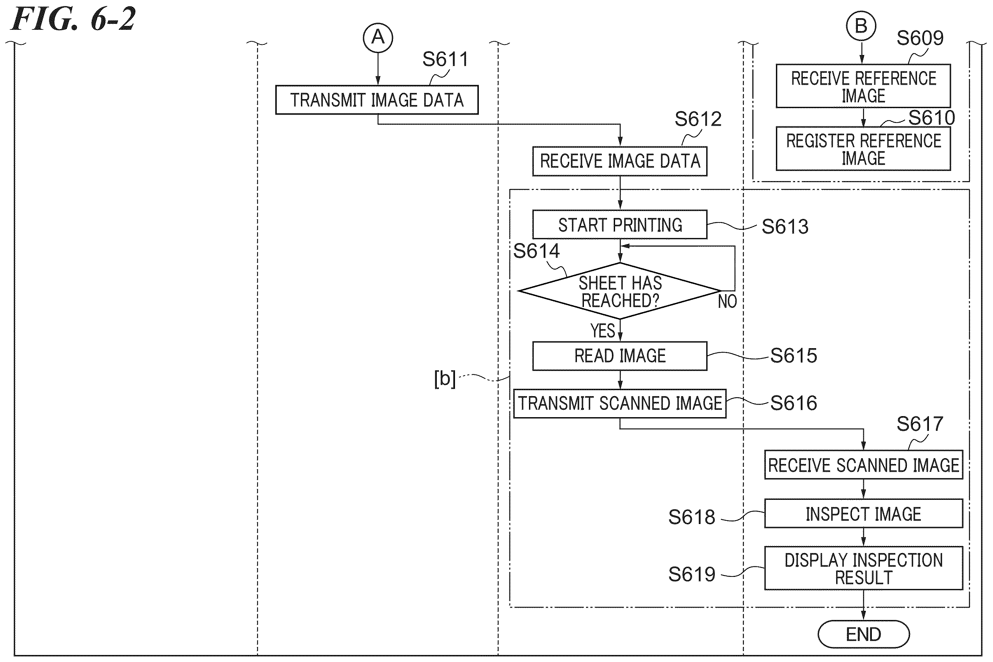

A first embodiment will be described below with reference to FIGS. 1 to 6-2. FIG. 1 is a schematic view showing an entire configuration of an inspection system according to the first embodiment. The inspection system shown in FIG. 1, denoted by reference numeral 1000, is a system that performs inspection on a print product. The print product is not particularly limited, and can be a booklet having a plurality of pages, a one-sheet print product, or the like. The inspection system 1000 includes an image forming apparatus (first device) 101, an inspection unit 105, a large-capacity stacker 106, an inspection device (print inspection device) 107, an information processing apparatus (third device) 108, and a reference image generation device (second device) 109. The image forming apparatus 101, the inspection device 107, the information processing apparatus 108, and the reference image generation device 109 are formed as separate bodies from each other. The inspection unit 105 and the large-capacity stacker 106 are incorporated in the image forming apparatus 101. The image forming apparatus 101 and the reference image generation device 109 are connected via a cable 111. The information processing apparatus 108 and the reference image generation device 109 are connected via a cable 110. The inspection device 107 and the reference image generation device 109 are connected via a cable 112. The inspection device 107 and the inspection unit 105 are connected via a cable 113. The image forming apparatus 101 has a user interface (UI) panel 102, a sheet feeding deck 103, and an option deck 104. The UI panel 102 has a function of receiving a user operation and a function of displaying a screen. In the sheet feeding deck 103, printing sheets (hereinafter sometimes simply referred to as the "sheets") are accommodated. The option deck 104 is a three-tier sheet feeding deck which accommodates printing sheets each tier. The image forming apparatus 101 performs printout based on a variety of input data, such as print data transmitted from the information processing apparatus 108. The printing method used by the image forming apparatus 101 is the electrophotographic method in the present embodiment but is not limited to this, and for example, the inkjet method, the offset method, or the like can be employed. The image forming apparatus 101 is not particularly limited, but, for example, a multi-function peripheral (MFP) can be used. Further, the image forming apparatus 101 can incorporate a finisher capable of performing stapling, a folding device, a bookbinding device, and so forth.

The image forming apparatus 101 has the inspection unit 105 and the large-capacity stacker 106, incorporated therein, which are communicably connected to each other via a communication cable as an internal bus. The inspection unit 105 receives a print product output from the image forming apparatus 101. Then, the inspection unit 105 acquires image data (print data) for inspecting whether or not the print product has an abnormal image. The abnormal image refers to an image which lowers the quality of the print product. The abnormal image is not particularly limited, but can be, for example, a circular-shaped abnormal image (spot), which is caused by attachment of a color material at an unintended location in printing, and a linear abnormal image (streak) as color loss, which is caused by insufficient attachment of a color material at an intended location. The image data acquired by the inspection unit 105 is transferred to the inspection device 107. The inspection device 107 inspects, based on the image data transferred from the inspection unit 105, whether or not a print product has an abnormal image. A result of this inspection is transmitted to the inspection unit 105. Note that although the inspection is performed by the inspection device 107 in the present embodiment, this is not limitative, but, for example, the inspection can be performed by an inline inspection machine that performs every phase of image formation, inspection, post-processing, and sheet discharging. A display 115 is connected to the inspection device 107. The display 115 is e.g. a crystal liquid display and has a function of receiving a user operation and a function of displaying a screen. The large-capacity stacker 106 has a main tray and a top tray. The main tray can stack several thousands of printing sheets. Further, the large-capacity stacker 106 can receive an output sheet inspected by the inspection unit 105 and can also switch a sheet discharging destination based on a result of the inspection performed by the inspection unit 105.

The reference image generation device 109 generates a reference image (reference image data) based on an raster image processor (RIP) image received from the information processing apparatus 108. Further, the reference image generation device 109 has a branching function. The branching function refers to a function of branching the transmission destination of image data to two transmission destinations. One transmission destination (hereinafter referred to as the "first transmission destination") of the two transmission destinations is an image processor 259 of the reference image generation device 109. Further, the other transmission destination (hereinafter referred to as the "second transmission destination") is the image forming apparatus 101. The first transmission destination and the second transmission destination can both acquire the same image data. The information processing apparatus 108 generates a print job. This print job is transmitted from the information processing apparatus 108 to the image forming apparatus 101 via the reference image generation device 109. In the image forming apparatus 101, processing for printing data on a sheet is performed based on the print job. Further, a display 114 is connected to the information processing apparatus 108. The display 114 is e.g. a liquid crystal display and has a function of receiving a user operation and a function of displaying a screen.

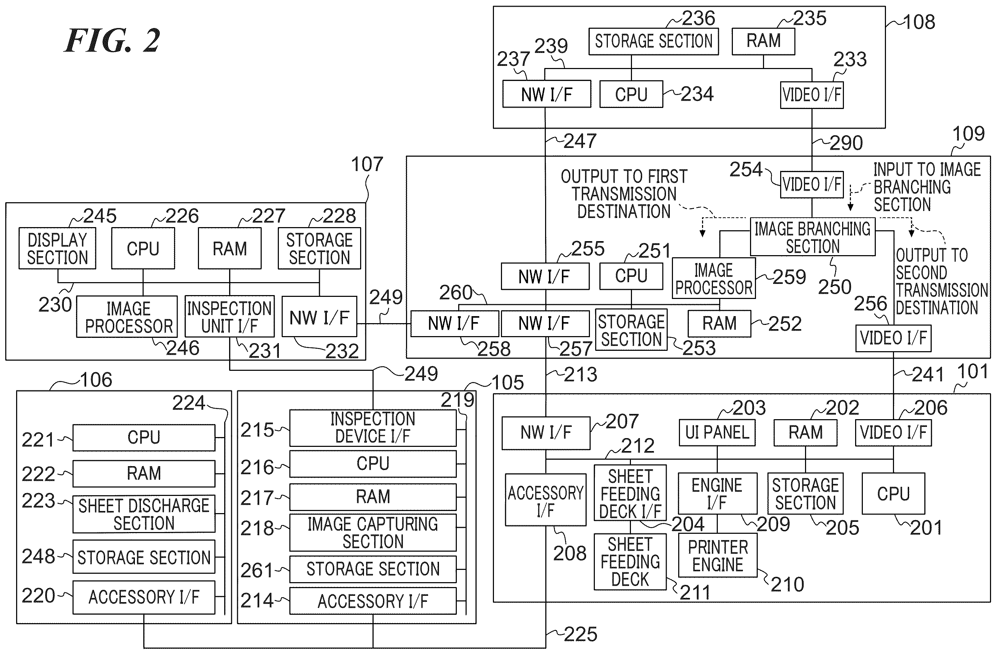

FIG. 2 is a block diagram showing hardware configurations of the image forming apparatus 101, the inspection unit 105, the large-capacity stacker 106, the inspection device 107, the information processing apparatus 108, and the reference image generation device 109, respectively. As shown in FIG. 2, the image forming apparatus 101 includes a central processing unit (CPU) 201, a random access memory (RAM) 202, a UI panel 203, a sheet feeding deck interface (I/F) 204, and a storage section 205. Further, the image forming apparatus 101 includes a video I/F 206, a network interface (NW I/F) 207, an accessory I/F 208, an engine I/F 209, a sheet feeding deck 211, and a printer engine (printing unit) 210. These hardware units included in the image forming apparatus 101 are communicably connected to each other via a system bus 212. The CPU 201 is a computer that performs control and calculation in the components included in the image forming apparatus 101. The CPU 201 executes programs stored in the storage section 205 and loaded into the RAM 202. These programs include a control program for causing the CPU 201 to execute a method of controlling the inspection system, and the like. Note that this control program is not limitedly stored only in the image forming apparatus 101 but can be stored in another apparatus other than the image forming apparatus 101 or can be stored in a state distributed to a plurality of apparatuses. The RAM 202 is a type of volatile storage device which can be directly accessed from the CPU 201. Further, the RAM 202 is used as a work area for the CPU 201 or a temporary storage area for temporary storing data. The storage section 205 functions as a temporary storage area and a work memory when the image forming apparatus 101 is operated.

The engine I/F 209 communicates with the printer engine 210. The sheet feeding deck I/F 204 communicates with the sheet feeding deck 211. The sheet feeding deck 211 is formed by the sheet feeding deck 103 and the option deck 104. The UI panel 203 is a user interface included in the UI panel 102 and used to perform the whole operation of the image forming apparatus 101. In the present embodiment, the UI panel 203 has an electrostatic capacitance-type touch panel. The NW I/F 207 is connected to a NW I/F 257 of the reference image generation device 109 via a cable 213 to perform communication between the reference image generation device 109 and the image forming apparatus 101.

The video I/F 206 is connected to a video I/F 256 of the reference image generation device 109 via a video cable 241 to perform communication of image data between the image forming apparatus 101 and the reference image generation device 109. The accessory I/F 208 is connected to an accessory I/F 214 of the inspection unit 105 and an accessory I/F 220 of the large-capacity stacker 106 via a cable 225. With this, communication between the image forming apparatus 101 and the inspection unit 105 and communication between the image forming apparatus 101 and the large-capacity stacker 106 are enabled.

The inspection unit 105 includes the accessory I/F 214, an inspection device I/F 215, a CPU 216, a RAM 217, an image capturing section (reading unit) 218, and a storage section 261, and these hardware units are communicably connected to each other via a system bus 219. The CPU 216 loads programs stored in the storage section 261 into the RAM 217. Then, the CPU 216 operates the programs to perform control and calculation in the components included in the inspection unit 105. The RAM 217 is a type of volatile storage device which can be directly accessed from the CPU 216. Further, the RAM 217 is used as a work area for the CPU 216 or a temporary data storage area other than this. The storage section 261 functions as a temporary storage area and a work memory, in operation of the inspection unit 105. The inspection device I/F 215 is connected to an inspection unit I/F 231 of the inspection device 107 via a cable 249-1. With this, communication between the inspection unit 105 and the inspection device 107 is enabled. The image capturing section 218 has an image capturing function equipped with e.g. a contact image sensor (hereinafter referred to as the "CIS"). The image capturing section 218 captures an image of a printed sheet passing through the inspection unit 105. This captured image is transmitted to the inspection device 107 via the inspection device I/F 215. The captured image is transmitted for the purpose of performing inspection of a print product by the inspection device 107. Note that in the image capturing section 218, in place of the CIS, another type of sensor, such as a charge coupled device (CCD) image sensor, can be used.

The large-capacity-stacker 106 includes the accessory I/F 220, a CPU 221, a RAM 222, a sheet discharge section 223, and a storage section 248, and these hardware units are communicably connected to each other via a system bus 224. The CPU 221 loads programs stored in the storage section 248 into the RAM 222. Then, the CPU 221 operates the programs to perform control and calculation in the components included in the large-capacity stacker 106. The RAM 222 is a type of volatile storage device which can be directly accessed from the CPU 221. Further, the RAM 222 is used as a work area for the CPU 221 or a temporary data storage area other than this. The storage section 248 functions as a temporary storage area and a work memory when the large-capacity stacker 106 operates. Further, the storage section 248 stores a reference image. The sheet discharge section 223 controls an operation of discharging sheets onto the main tray and the top tray, and monitors the stacking states of the main tray and the top tray.

The inspection device 107 includes a CPU 226, a RAM (storage medium) 227, a storage section 228, and a display section 245. Further, the inspection device 107 includes the inspection unit I/F 231, a NW I/F 232, and an image processor (inspection processor) 246. These hardware units included in the inspection device 107 are communicably connected to each other via a system bus 230. The CPU 226 loads programs stored in the storage section 228 into the RAM 227. Then, the CPU 226 operates the programs to perform control and calculation in the components included in the inspection device 107. The RAM 227 is a type of volatile storage device which can be directly accessed from the CPU 226. Further, the RAM 227 is used as a work area for the CPU 226 or a temporary storage area other than this. The storage section 228 functions as a temporary storage area and a work memory when the inspection device 107 operates. The display section 245 is included in the display 115 and receives a user operation performed on the inspection device 107 or displays a state of the inspection device 107. The image processor 246 reads a reference image received from the reference image generation device 109 and a scanned image (scanned image data) received from the inspection unit 105 and compares these images. Then, the image processor 246 inspects, based on a result of this comparison, whether or not a print product has a defect. Hereinafter, a case where a result of the comparison, i.e. an inspection result indicates that the print product has no defect, is sometimes referred to as "inspection result GOOD", and a case where the inspection result indicates that the print product has a defect, is sometimes referred to as "inspection result NG".

The information processing apparatus 108 is an apparatus as an acquisition source of print data for the reference image generation device 109. The information processing apparatus 108 includes a video I/F 233, a CPU 234, a RAM 235, a storage section 236, and a NW I/F 237, and these hardware units are communicably connected to each other via a system bus 239. The CPU 234 loads programs stored in the storage section 236 into the RAM 235. Then, the CPU 234 operates the programs to perform control and calculation in the components included in the information processing apparatus 108. The RAM 235 is a type of volatile storage device which can be directly accessed from the CPU 234. Further, the RAM 235 is used as a work area for the CPU 234 or a temporary data storage area. The storage section 236 functions as a temporary storage area and a work memory when the information processing apparatus 108 operates. The NW I/F 237 is connected to a NW I/F 255 of the reference image generation device 109 via a cable 247 to perform communication between the reference image generation device 109 and the information processing apparatus 108. The video I/F 233 is connected to a video I/F 254 of the reference image generation device 109 via a video cable 290 to perform communication of image data between the reference image generation device 109 and the information processing apparatus 108.

The reference image generation device 109 is a processing apparatus (bridge apparatus) that processes image data based on which a print product to be inspected is formed. The reference image generation device 109 includes an image branching section (branching unit) 250, a CPU 251, a RAM (storage medium) 252, a storage section 253, the video I/F (data acquisition unit) 254, the NW I/F 255, the video I/F 256, the NW I/F 257, a NW I/F 258, and the image processor 259. These hardware units included in the reference image generation device 109 are communicably connected to each other via a system bus 260. The CPU 251 loads programs stored in the storage section 253 into the RAM 252. Then, the CPU 251 operates the programs to perform control and calculation in the components included in the reference image generation device 109. The RAM 252 is a type of volatile storage device which can be directly accessed from the CPU 251. Further, the RAM 252 is used as a work area for the CPU 251 or a temporary data storage area other than this. The storage section 253 functions as a temporary storage area and a work memory for the reference image generation device 109. The NW I/F 255 is connected to the NW I/F 237 of the information processing apparatus 108 via the cable 247 to perform communication between the reference image generation device 109 and the information processing apparatus 108. The NW I/F 257 is connected to the NW I/F 207 of the image forming apparatus 101 via the cable 213 to perform communication between the reference image generation device 109 and the image forming apparatus 101. The NW I/F 258 is connected to the NW I/F 232 of the inspection device 107 via a cable 249-2 to perform communication between the reference image generation device 109 and the inspection device 107.

The video I/F 254 is connected to the video I/F 233 of the information processing apparatus 108 via the video cable 290 to perform communication of image data between the reference image generation device 109 and the information processing apparatus 108. This makes it possible to acquire image data from the information processing apparatus 108 before branching image data by the image branching section 250, described hereinafter. This image data is input to the image branching section 250. The image branching section 250 has a signal branching circuit equipped with a buffer circuit including one input section and two output sections. This makes it possible to branch the image data input to the input section into two signals. Then, one of the two signals is output from one of the two output sections to the image processor 259 as the first transmission destination. Further, the other signal is output from the other output section to the video I/F 206 of the image forming apparatus 101 as the second transmission destination via the video I/F 256. Although the image data output to the first transmission destination and the image data output to the second transmission destination are the identical image data, the image data output to the first transmission destination is used for generation of a reference image, and the image data output to the second transmission destination is used as print data based on which a print product is formed. The image processor 259 receives the image data from the image branching section 250. The image processor 259 executes image processing, such as color space conversion, resolution conversion, and image compression processing, on the image data. With this, a reference image is generated with reference to which inspection is performed. The reference image is stored in the RAM 252. Further, the reference image is read out from the RAM 252 and transmitted to the inspection device 107 via the NW I/F 258. Note that in the present embodiment, as the connection interface connecting between the image forming apparatus 101, the reference image generation device 109, and the information processing apparatus 108, one NW I/F and one video I/F are used, but this is not limitative. For example, the connection interface can be an I/F having the function of at least one NW I/F and the function of at least one video I/F.

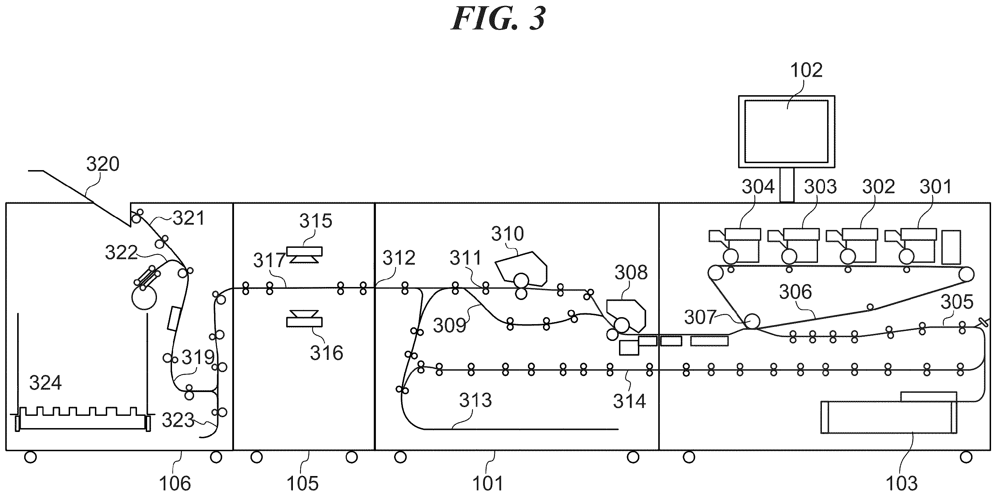

FIG. 3 is a schematic view showing internal configurations of the image forming apparatus 101, the inspection unit 105, and the large-capacity stacker 106. As shown in FIG. 3, the image forming apparatus 101 incorporates the sheet feeding deck 103. In the sheet feeding deck 103, only one topmost printing sheet is separated and conveyed to a sheet conveying path 305. Further, the image forming apparatus 101 includes development stations 301 to 304, an intermediate transfer belt 306, and a fixing unit 308. The development station 301 forms a toner image using color toner of yellow (Y). The development station 302 forms a toner image using color toner of magenta (M). The development station 303 forms a toner image using color toner of cyan (C). The development station 304 forms a toner image using color toner of black (K). Each toner image is primarily transferred onto the intermediate transfer belt 306. The intermediate transfer belt 306 is rotated in a clockwise direction, as viewed in FIG. 3. The toner images on the intermediate transfer belt 306 are transferred onto the printing sheet conveyed from the sheet conveying path 305 at a secondary transfer position 307, to form a color image.

The fixing unit 308 has a pressure roller and a heating roller, and when the printing sheet passes between these rollers, the toner on the printing sheet can be melted and pressure-fixed. This makes it possible to fix the color image to the printing sheet. The printing sheet having passed through the fixing unit 308 passes along a sheet conveying path 309 and is conveyed to a sheet conveying path 312. Note that depending on a printing sheet, there is a case where fixing of the color image is further required. In this case, the printing sheet having passed through the fixing unit 308 is conveyed to a second fixing unit 310. The second fixing unit 310 can additionally melt and pressure-fixes the color image. After that, the printing sheet passes along a sheet conveying path 311 and is conveyed to the sheet conveying path 312. Further, in a case where printing is performed on both sides of the printing sheet, the printing sheet having passed through the fixing unit 308 is conveyed to a sheet inversion path 313 and has its front and back sides inverted. After that, the printing sheet is conveyed to a double-sided printing conveying path 314, and toner images are transferred onto the back side at the secondary transfer position 307, to form a color image.

The inspection unit 105 has a CIS 315 and a CIS 316, arranged in a state opposed to each other, as the image capturing section 218. The CIS 315 is a sensor for reading an image on an upper surface of a printing sheet. The CIS 316 is a sensor for reading an image on a lower surface of the printing sheet. The inspection unit 105 scans (reads) the printing sheet by using the CIS 315 and the CIS 316 when the printing sheet conveyed to a sheet conveying path 317 reaches a predetermined position. The scanned images are transmitted to the inspection device 107 via the inspection device I/F 215 and the accessory I/F 220. The inspection device 107 determines whether or not each scanned image has a defect. A result of this determination is transmitted to the inspection unit 105. The CPU 216 transmits the determination result to the large-capacity stacker 106.

The large-capacity stacker 106 has the main tray, denoted by reference numeral 324, as a tray for stacking printing sheets. The printing sheet having passed through the inspection unit 105 passes along a sheet conveying path 319 and is conveyed into the large-capacity stacker 106. The printing sheet passes along a sheet conveying path 322 and is stacked onto the main tray 324. Further, the large-capacity stacker 106 has the top tray, denoted by reference numeral 320, as a sheet discharging tray. A printing sheet (print product) determined to have a defect by the inspection device 107 is discharged onto the top tray 320. In a case where the printing sheet is output to the top tray 320, the printing sheet is conveyed from the sheet conveying path 319 to the top tray 320 via a sheet conveying path 321. The large-capacity stacker 106 has an inversion section 323 for inverting a printing sheet. The inversion section 323 is used in a case where a printing sheet is stacked on the main tray 324. By inversion of a printing sheet at the inversion section 323, it is possible to make the stacking order and the facing direction of sheets stacked on the main tray 324 same as those of pages to be printed in the main tray 324.

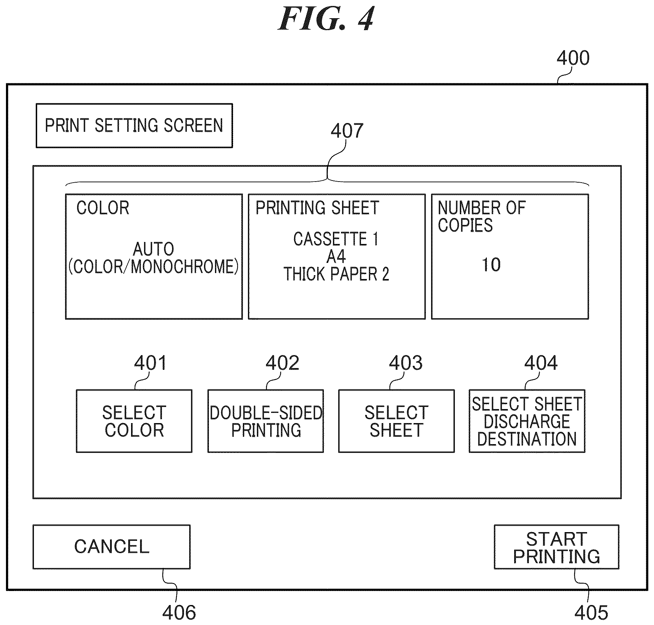

FIG. 4 is a diagram showing a screen displayed on the information processing apparatus 108. An operation screen 400 shown in FIG. 4 is displayed on the display 114 of the information processing apparatus 108 when printing is instructed to the image forming apparatus 101. The operation screen 400 includes buttons 401 to 406 and a print condition display section 407. The button 401 is for selecting a color mode for printing, i.e. for selecting color printing or monochrome printing. A result of this selection is displayed in the print condition display section 407. The button 402 is for selecting a printing surface, i.e. for selecting simplex printing or duplex printing. The button 403 is for selecting a type of printing sheet used for printing. A result of this selection is displayed in the print condition display section 407. The button 404 is for selecting a discharging destination of a print product. Further, by operating numeric keys (not shown), the number of copies can be set. The number of copies is displayed in the print condition display section 407. When the button 405 is pressed (operated) in a state in which the selection conditions have been set by using the buttons 401 to 404, printing under the selected conditions is started. When the button 406 is pressed in the state in which the selection conditions have been set by using the buttons 401 to 404, the selected conditions are canceled, and at the same time the display of the operation screen 400 is inhibited, to display another predetermined initial screen.

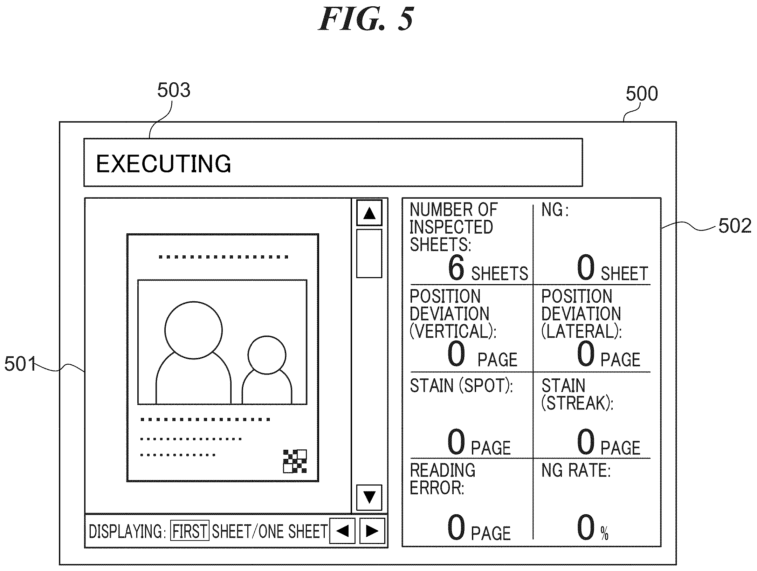

FIG. 5 is a diagram showing a screen displayed on the inspection device 107. An inspection result screen 500 shown in FIG. 5 is displayed on the display (notification unit) 115 of the inspection device 107 during execution of inspection. The inspection result screen 500 includes an image display section 501, an inspection result display section 502, and a status display section 503. In the image display section 501, a scanned image read by the inspection unit 105 is displayed. The scanned image is updated on a page-by-page basis of a print product. Note that in the case of inspection result NG, a marking which enables a user to grasp a location of inspection result NG can be added to the scanned image displayed in the image display section 501. The inspection result display section 502 displays (notifies) information on an inspection result (result of second processing), including the number of sheets on which the inspection is completed, the number of sheets determined as inspection result NG, an inspection result NG ratio, and types of inspection result NG. This enables the user to grasp details of the inspection result. In the status display section 503, as a status of inspection, there is displayed standby (standby for execution of inspection), executing (inspection is being executed), inspection completed, or the like.

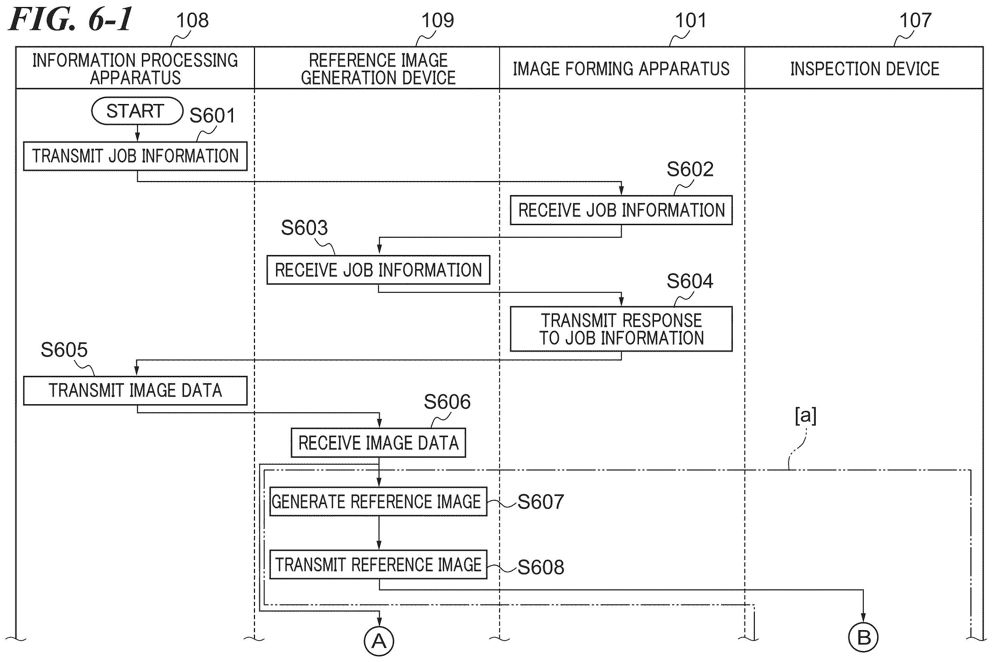

FIG. 6-1 and FIG. 6-2 are sequence diagrams showing a process executed between the information processing apparatus 108, the reference image generation device 109, the image forming apparatus 101, and the inspection device 107. Execution of processing operations of the sequence diagram shown in FIG. 6-1 and FIG. 6-2 is started when the button 405 (see FIG. 4) is pressed. Referring to FIG. 6-1 and FIG. 6-2, in a step S601, in a case where the button 405 on the operation screen 400 displayed on the display 114 is pressed, the CPU 234 of the information processing apparatus 108 transmits job information to the image forming apparatus 101. The job information includes, for example, the number of pages of a print product, information on sheets used for printing the print product, settings of inspection conditions of the print product, and information on a discharging destination of the print product.

In a step S602, the CPU 201 of the image forming apparatus 101 receives the job information transmitted in the step S601. With this, in the image forming apparatus 101, preparation for receiving a print job is executed. Further, the job information is stored in the RAM 202 until the print job is terminated. Further, the CPU 201 transmits the job information to the reference image generation device 109.

In a step S603, the CPU 251 of the reference image generation device 109 receives the job information transmitted in the step S602. With this, in the reference image generation device 109, preparation for receiving the print job is executed. Further, the CPU 251 transmits information (response) that the job information has been received, to the image forming apparatus 101.

In a step S604, the CPU 201 of the image forming apparatus 101 receives the information that the job information transmitted in the step S603 has been received. The CPU 201 transmits a response result of the job information from the reference image generation device 109, i.e. information that the job information has been received by the reference image generation device 109, to the information processing apparatus 108.

In a step S605, the CPU 234 of the information processing apparatus 108 receives the response result transmitted in the step S604. The CPU 234 starts transmission of image data included in the print job to the reference image generation device 109. This image data is data based on which a print product is formed by printing. Further, the print product has a plurality of pages. Transmission of image data is performed for each image data forming one page.

In a step S606, the CPU 251 of the reference image generation device 109 receives the image data transmitted in the step S605. This image data is input to the image branching section 250. As described hereinabove, the image data input to the image branching section 250 is transmitted in a state branched to the first transmission destination and the second transmission destination by the image branching section 250. The first transmission destination is the image processor 259. The image processor 259 can receive the image data. The second transmission destination is the image forming apparatus 101. The image forming apparatus 101 can receive the same image data as the image data received by the image processor 259.

In a step S607, the CPU 251 of the reference image generation device 109 controls the image processor 259 to execute image processing on the image data received by the image processor 259, to thereby generate a reference image. The reference image is stored in the RAM 252.

In a step S608, the CPU 251 of the reference image generation device 109 transmits the reference image generated in the step S607 to the inspection device 107.

In a step S609, the CPU 226 of the inspection device 107 receives the reference image transmitted in the step S608.

In a step S610, the CPU 226 of the inspection device 107 stores the reference image received in the step S609 in the storage section 228. With this, the reference image is registered as an image for inspection. The steps S607 to S610 (part of (a), which is enclosed by two-dot chain lines in FIG. 6-1 and FIG. 6-2) are hereinafter referred to as the first processing in which the reference image is formed based on the image data. Further, the components and the units that execute the first processing can be referred to as a first execution unit. Further, this first execution unit is also the first transmission destination in which the first processing is executed.

In a step S611, the CPU 251 of the reference image generation device 109 transmits the image data to the image forming apparatus 101 as the second transmission destination.

In a step S612, the CPU 201 of the image forming apparatus 101 receives the image data transmitted in the step S611. This image data is data to which a cyclic redundancy check (CRC) value has been added. The CRC value is a value generated, when image data is transferred from the information processing apparatus 108 in the step S605, from this image data, and used to detect whether or not an error has occurred during transfer of the image data. The CPU 201 determines whether or not a value calculated from the image data received in the step S612 and the CRC value match. As a result of this determination, if it is determined that the values match, it is determined that a data error has not occurred during the transfer, and the CPU 201 associates the job information stored in the RAM 202 in the step S602 and the image data received in the step S612 to set a print job. On the other hand, if it is determined that the values do not match, it is determined that a data error has occurred during the transfer, and the CPU 201 requests the information processing apparatus 108 to retransmit the image data. With this, the reference image generation device 109 transmits image data retransmitted from the information processing apparatus 108 to the image forming apparatus 101 again. Then, the CPU 251 receives the image data from the information processing apparatus 108 and deletes the image data which has been stored (image data including the error) and is no longer needed due to reception of the retransmitted image data.

In a step S613, the CPU 201 of the image forming apparatus 101 controls the printer engine 210 to start printing based on the print job.

In a step S614, the CPU 216 of the inspection unit 105 incorporated in the image forming apparatus 101 determines whether or not the printing sheet has reached the sheet conveying path 317 by using a sheet detection sensor (not shown) provided on the sheet conveying path 317 of the inspection unit 105. If it is determined in the step S614 that the printing sheet has reached the sheet conveying path 317, the process proceeds to a step S615. On the other hand, if it is determined in the step S614 that the printing sheet has not reached the sheet conveying path 317, the process remains in the step S614.

In the step S615, the CPU 216 of the inspection unit 105 reads images of the printing sheet passing along the sheet conveying path 317 by using the CIS 315 and the CIS 316.

In a step S616, the CPU 216 of the inspection unit 105 transmits scanned images read in the step S615 to the inspection device 107.

In a step S617, the CPU 226 of the inspection device 107 receives the scanned images transmitted in the step S616.

In a step S618, the CPU 226 of the inspection device 107 controls the image processor (inspection unit) 246 to compare the reference image stored in the storage section 228 in the step S610 and the scanned image received in the step S617. This makes it possible to inspect whether or not the print product has a defect. For example, as a result of the inspection, if it is determined that the print product has no defect, i.e. if detection result GOOD is determined, this print product is discharged onto the main tray 324. Further, as a result of the inspection, if it is determined that the print product has a defect, i.e. if detection result NG is determined, this print product is discharged onto the top tray 320.

In a step S619, the CPU 226 of the inspection device 107 displays an execution result (inspection result) of the inspection processing in the step S618 in the inspection result display section 502 (see FIG. 5) on the inspection result screen 500. With this, the inspection result (processing result in the second processing) is notified, whereby the user can grasp the inspection result. Note that the steps S605 to S619 are repeatedly executed up to the final page of the print job. Then, after termination of the processing on the final page, the CPU 226 displays "inspection completed" in the status display section 503 on the inspection result screen 500. The steps S613 to S619 (part (b) enclosed by two-dot chain lines in FIG. 6-2) are hereinafter referred to as the second processing in which the scanned image obtained by reading a print product to be inspected and the reference image are compared. Further, the components and the units executing the second processing can be referred to as a second execution unit. This second execution unit is also the second transmission destination in which the second processing is executed. Then, by using the above-described branching function of the reference image generation device 109, the transmission destination of one image data can be branched to the first transmission destination and the second transmission destination. This makes it possible to execute the first processing in the first transmission destination and the second processing in the second transmission destination in parallel (see FIG. 6-1 and FIG. 6-2). By executing these processings in parallel, it is possible to eliminate a waiting time in which inspection of a print product is required to be awaited until a reference image is generated and stored. Further, since this waiting time is eliminated, it is possible to quickly start inspection of a print product.

Further, in the inspection system 1000, determination of whether or not transmission of the image data to the first transmission destination has been completed by the image branching section 250 and determination of whether or not transmission of the image data to the second transmission destination has been completed can be performed. This determination is performed e.g. by the CPU (determination unit) 251 of the reference image generation device 109. Then, as a result of this determination, for example, if it is determined that transmission of the image data to the second transmission destination has not been completed, the video I/F 254 of the reference image generation device 109 acquires the image data again from the information processing apparatus 108 as the acquisition source of the image data. Then, the image data acquired by the video I/F 254 is transmitted to the first transmission destination and the second transmission destination. This makes it possible to prepare the reference image and the scanned image for inspection, respectively.

### Second Embodiment

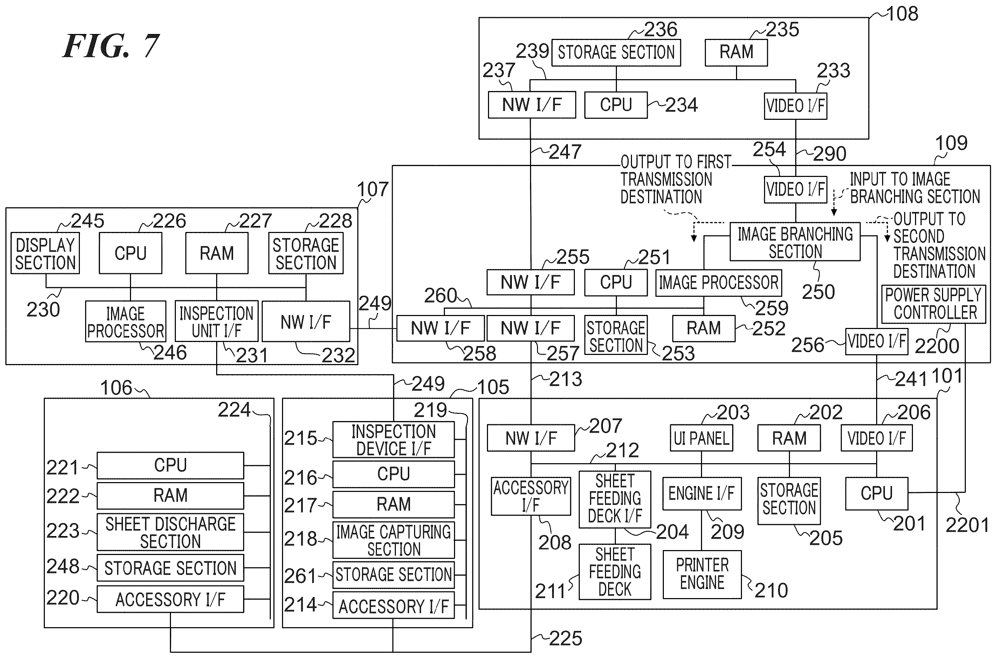

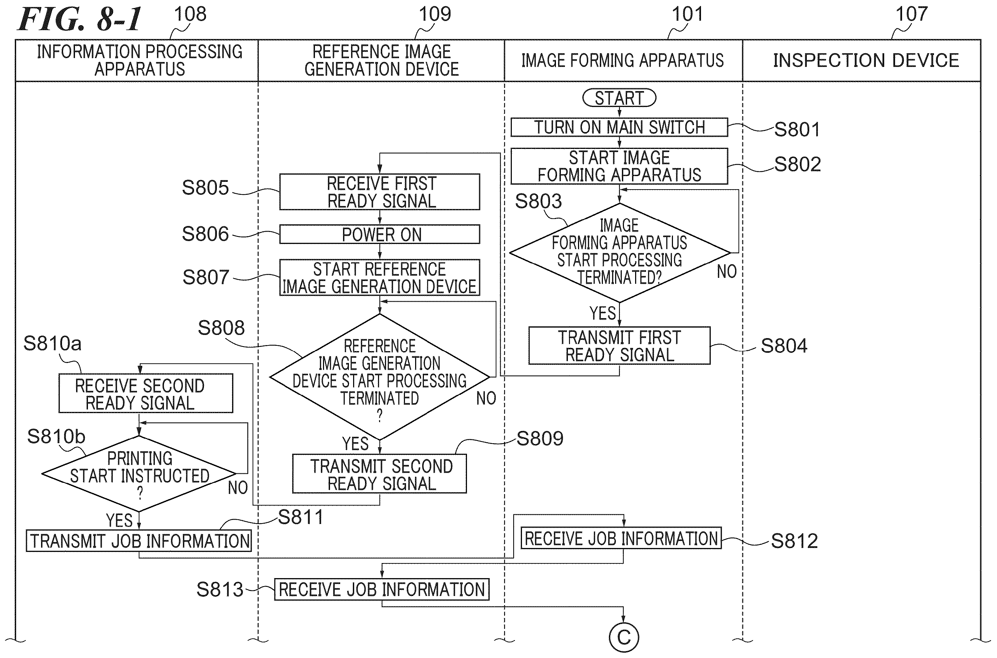

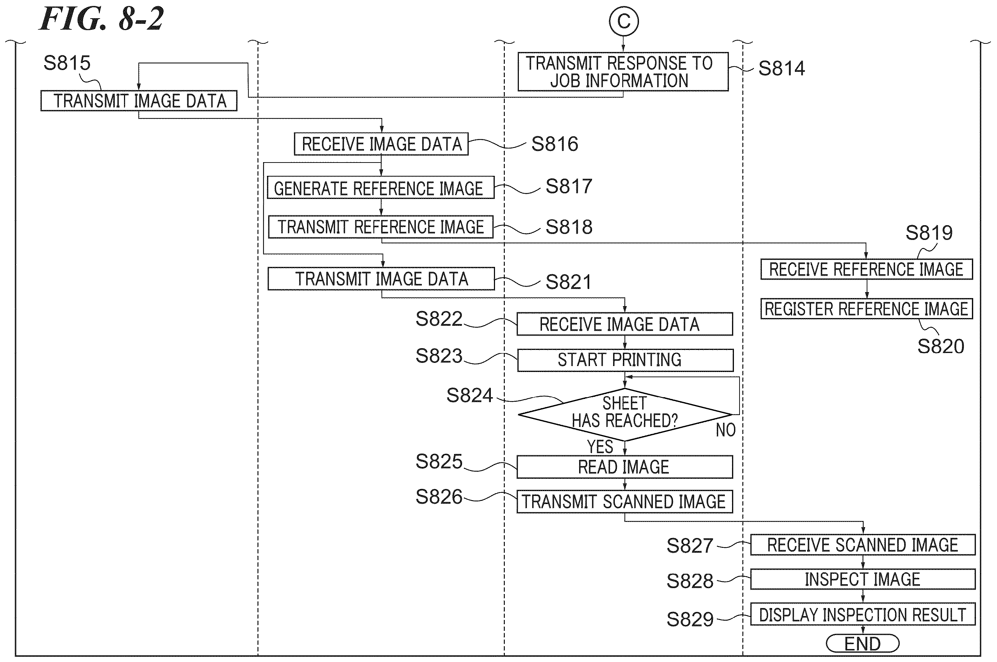

A second embodiment will be described below with reference to FIGS. 7 and 8, but the description will be given mainly of different points from the above-described embodiment, and description of the same points is omitted. FIG. 7 is a block diagram showing the hardware configurations of the image forming apparatus 101, the inspection unit 105, the large-capacity stacker 106, the inspection device 107, the information processing apparatus 108, and the reference image generation device 109, according to the second embodiment, respectively. As shown in FIG. 7, in the second embodiment, the reference image generation device 109 has components ranging from the image branching section 250 to the image processor 259, and further has a power supply controller 2200. As a main power source of the reference image generation device 109, a power source of e.g. 24V or 12V is used, and a logic power source of e.g. 5V, 3.3V, or 2.5V is generated via the power supply controller 2200 as a power source for the components ranging from the image branching section 250 to the image processor 259. The power supply controller 2200 is communicably connected to the CPU 201 of the image forming apparatus 101 via a signal line 2201. With this, the power supply controller 2200 can receive a first Ready signal output from the CPU 201 of the image forming apparatus 101. In this case, the power supply controller 2200 switches ON/OFF of the logic power source. The first Ready signal refers to a signal output to notify that the image forming apparatus 101 is enabled to output an image. Upon receipt of the first Ready signal, the main power source of the reference image generation device 109 is input. This starts up the components ranging from the image branching section 250 to the image processor 259.

FIG. 8-1 and FIG. 8-2 are sequence diagrams showing a process executed between the information processing apparatus 108, the reference image generation device 109, the image forming apparatus 101, and the inspection device 107. Execution of the processing operations of the sequence diagram shown in FIG. 8-1 and FIG. 8-2 is started when a switch (main switch), not shown, of the main power source of the image forming apparatus 101 is pressed. Referring to FIG. 8-1 and FIG. 8-2, in a step S801, when the main power switch of the image forming apparatus 101 is pressed to place the image forming apparatus 101 in an ON state, electric power is supplied to the components of the image forming apparatus 101.

In a step S802, the CPU 201 of the image forming apparatus 101 starts processing for starting the whole image forming apparatus 101. The start processing is not particularly limited, and includes, for example, execution of the software by the CPU 201, confirmation of the states of the components of the image forming apparatus 101, and so forth.

In a step S803, the CPU 201 of the image forming apparatus 101 determines whether or not the start processing has been normally completed. If it is determined in the step S803 that the start processing has been normally completed, the process proceeds to a step S804. On the other hand, if it is determined in the step S803 that the start processing has not been normally completed, the process remains in the step S803.

In the step S804, the CPU 201 of the image forming apparatus 101 transmits a first Ready signal to the power supply controller 2200 of the reference image generation device 109.

In a step S805, the CPU 251 of the reference image generation device 109 controls the power supply controller 2200 to receive the first Ready signal transmitted in the step S804.

In a step S806, the CPU 251 of the reference image generation device 109 controls the power supply controller 2200 to place the power source of the reference image generation device 109 in the ON state. This power source is a logic power source of e.g. 5V, 3.3V, or 2.5V for controlling the system of the reference image generation device 109. The power supply controller 2200 switches a DCDC converter that generates the logic power source from the power source of e.g. 24V or 12V, from the OFF state to the ON state.

In a step S807, the CPU 251 of the reference image generation device 109 starts the start processing. The start processing is not particularly limited, and includes, for example, processing for starting the image branching section 250, processing for starting the image processor 259, and so forth. The image branching section 250 and the image processor 259 process image data. Therefore, it is assumed that there is used an image data-dedicated integrated circuit (IC), such as an image processing IC or a field-programmable gate array (FPGA), which is provided separately from the CPU 251. In this case, processing for starting the image data-dedicated IC is required, and it is preferable that termination of the start processing is notified to the CPU 251.

In a step S808, the CPU 251 of the reference image generation device 109 determines whether or not the start processing has been normally completed. If it is determined in the step S808 that the start processing has been normally completed, the process proceeds to a step S809. On the other hand, if it is determined in the step S808 that the start processing has not been normally completed, the process remains in the step S808.

In the step S809, the CPU 251 of the reference image generation device 109 transmits a second Ready signal to the information processing apparatus 108.

In a step S810a, the CPU 234 of the information processing apparatus 108 receives the second Ready signal transmitted in the step S809. With this, the CPU 234 can determine that the image forming apparatus 101 and the reference image generation device 109 have been placed in a state in which the processing operations in a step S810b et seq. can be executed (Ready state).

In the step S810b, the CPU 234 of the information processing apparatus 108 determines whether or not the button 405 on the operation screen 400 displayed on the display 114 has been pressed, i.e. whether or not the start of printing has been instructed. If it is determined in the step S810b that the button 405 has been pressed, the process proceeds to a step S811. On the other hand, if it is determined in the step S810b that the button 405 has not been pressed, the process remains in the step S810b.

The step S811 to a step S829 are the same as the steps S601 to S619 of the sequence diagram shown in FIG. 6-1 and FIG. 6-2.

As described above, in the present embodiment, in a case where the power source of the image forming apparatus 101 is switched from the OFF state to the ON state, the first Ready signal as the information on this fact is transmitted to the reference image generation device 109. With this, the power source of the reference image generation device 109 is switched from the OFF state to the ON state. Then, in a case where the power source of the reference image generation device 109 is switched from the OFF state to the ON state, the second Ready signal as the information on this fact is transmitted to the information processing apparatus 108. With this, in the inspection system 1000, it is possible to determine that the image forming apparatus 101 and the reference image generation device 109 have been placed in a state in which the processing operations in the step S810b et seq. can be executed.

### Third Embodiment

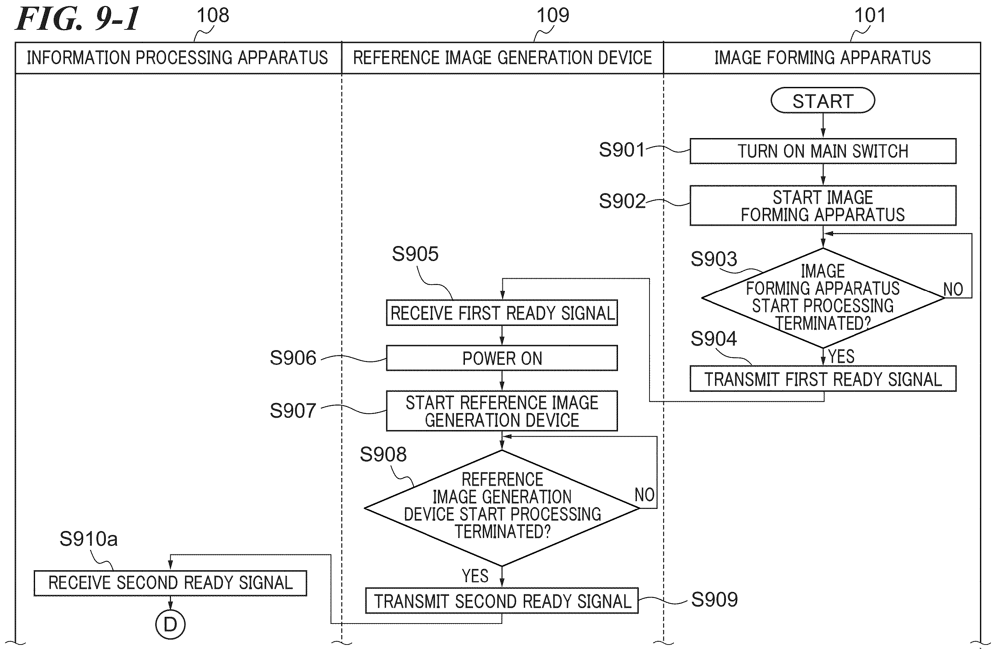

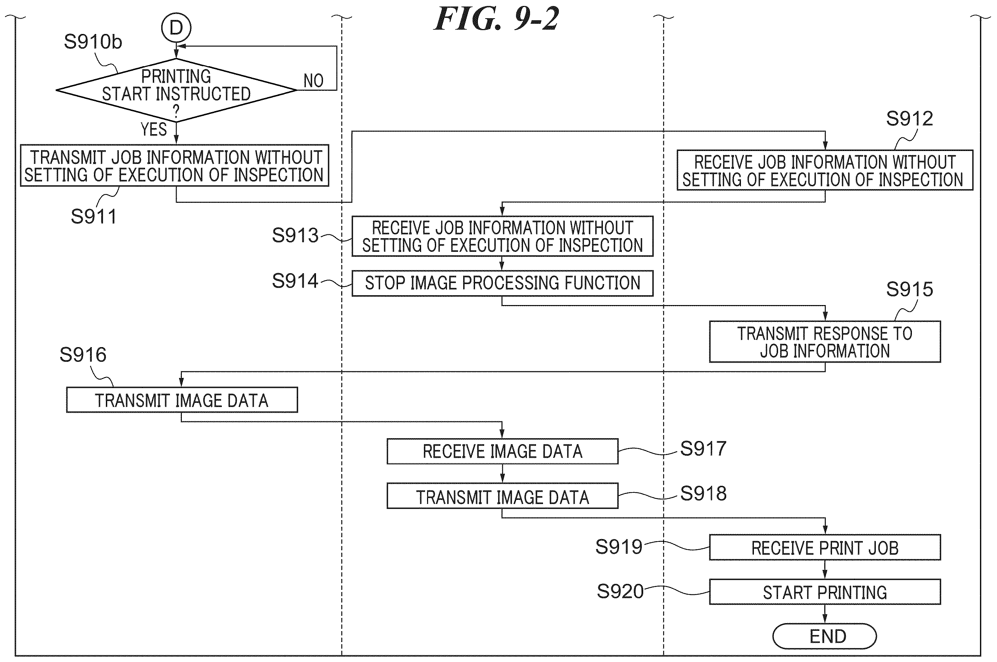

A third embodiment will be described below with reference to FIG. 9-1 and FIG. 9-2, but the description will be given mainly of different points from the above-described embodiments, and description of the same points is omitted. In the present embodiment, the description will be given of the operations of the image forming apparatus 101, the information processing apparatus 108, and the reference image generation device 109, which are performed when a print job is executed in a case where inspection of a print product is not performed. FIG. 9-1 and FIG. 9-2 are sequence diagrams showing a process executed between the information processing apparatus 108, the reference image generation device 109, and the image forming apparatus 101, according to the third embodiment. Referring to FIG. 9-1 and FIG. 9-2, steps S901 to S910b are sequentially executed. The steps S901 to S910b are the same as the steps S801 to S810b of the sequence diagram shown in FIG. 8-1. Then, if it is determined in the step S910b that the button 405 has been pressed, the process proceeds to a step S911. In the step S911, the CPU 234 of the information processing apparatus 108 transmits the job information to the image forming apparatus 101. The print product inspection setting in the present embodiment is set so as not to perform the inspection (image inspection). This setting information is included in the job information.

In a step S912, the CPU 201 of the image forming apparatus 101 receives the job information transmitted in the step S911. With this, in the image forming apparatus 101, preparation for receiving a print job is executed. Further, the job information is stored in the RAM 202 until the print job is terminated. Further, the CPU 201 transmits the job information to the reference image generation device 109.

In a step S913, the CPU 251 of the reference image generation device 109 receives the job information transmitted in the step S912. With this, in the reference image generation device 109, preparation for receiving the print job is executed.

In a step S914, since the setting information set so as not to perform the inspection of the print product is included in the job information received in the step S913, the CPU 251 of the reference image generation device 109 performs processing for stopping the image processing function. The processing for stopping the image processing function refers to processing for stopping the reference image generation function. The stopping method is not particularly limited, but, it can be, for example, a method of deactivating the reference image generation function, a method of stopping power supply to the image processor 259, or a method of stopping transmission of an image from the image branching section 250 to the image processor 259. Further, by executing the processing for stopping the image processing function, it is possible to reduce power consumption by an amount consumed by the image processing function. After the image processing function is stopped, the CPU 251 transmits information that the job information has been received to the image forming apparatus 101.

In a step S915, the CPU 201 of the image forming apparatus 101 receives the information that the job information has been received, which has been transmitted in the step S914. The CPU 201 transmits a response result of the job information from the reference image generation device 109 to the information processing apparatus 108.

In a step S916, the CPU 234 of the information processing apparatus 108 receives the response result transmitted in the step S915. The CPU 234 starts transmission of image data included in the print job to the reference image generation device 109. This image data is data based on which a print product is formed by printing. Further, transmission of image data is performed for each image data forming one page.

In a step S917, the CPU 251 of the reference image generation device 109 receives the image data transmitted in the step S916. This image data is input to the image branching section 250. As described above, the image data input to the image branching section 250 can be transmitted in a state branched to the two transmission destinations of the first transmission destination and the second transmission destination, but the inspection setting is set so as not to perform the inspection of the print product in the present embodiment, and hence transmission to the first transmission destination is omitted.

In a step S918, the CPU 251 of the reference image generation device 109 transmits the image data to the image forming apparatus 101 as the second transmission destination.

In a step S919, the CPU 201 of the image forming apparatus 101 receives the image data (print job) transmitted in the step S918.

In a step S920, the CPU 201 of the image forming apparatus 101 controls the printer engine 210 to start printing based on the image data received in the step S919.

As described above, in the present embodiment, in a case where inspection of a print product is stopped, it is also possible to stop generation of a reference image (execution of the first processing). This makes it possible to prevent unnecessary generation of a reference image.

Various embodiments have been described in detail above but it will be understood that the present disclosure is not limited to these embodiments and encompasses all modifications, variants, alternatives and equivalents falling within the scope of the appended claims.

## Claims

1. An inspection system comprising:
a display unit;
an interface configured to receive data including a plurality of pages, the data sent from a computer in response to a single instruction for sending the data by a user of the computer; and
one or more controllers having one or more processors and one or more memories, the one or more controllers configured to:
(a) generate reference data and (b) cause a printing unit to print the plurality of pages on separate sheets, based on the received data;
read each of the printed plurality of pages to generate a read image of each page;
inspect the read image of the each page based on the generated reference data; and
display an inspection result indicating whether a read image of a page is defective, on the display unit during the inspection of a read image of one of subsequent pages in the plurality of pages.

2. The inspection system according to claim 1, wherein the one or more controllers is/are configured to perform the inspection by comparing the generated reference data and the read image of each page.

3. The inspection system according to claim 1, wherein the reference data is generated from the received data without printing based on the received data.

4. The inspection system according to claim 1, wherein the reference data is generated from the received data without using the printing unit.

5. The inspection system according to claim 1, wherein the one or more controllers is/are configured to, in response to receiving and based on the data, (a) generate reference data and (b) cause the printing unit to print the plurality of pages on the separate sheets.

6. The inspection system according to claim 1, wherein the interface is configured to receive a single print job, and
wherein the single print job comprises the data including the plurality of pages.

7. The inspection system according to claim 6, further comprising a branching unit configured to branch the received data of the plurality of pages included in the single print job into the data for a plurality of pages corresponding to the generated reference data and data for a plurality of pages corresponding to created printed media.

8. The inspection system according to claim 1, wherein the inspection result includes at least one of the number of pages which are defective in inspection result, out of the subsequent pages in the plurality of pages, a ratio of the number of the pages which are defective to the number of inspected pages, and types of defect of the pages which are defective.
